Europäisches Patentamt

European Patent Office

Office européen des brevets

(11) Publication number: **0 228 486**
A1

# EUROPEAN PATENT APPLICATION

(21) Application number: 85309255.9

(22) Date of filing: 19.12.85

(51) Int. Cl.⁴: **A23L 1/318** , A23B 4/02

(43) Date of publication of application:
15.07.87 Bulletin 87/29

(84) Designated Contracting States:
AT BE CH DE FR GB IT LI LU NL SE

(71) Applicant: **Comercial Alimentaria Internacional, S.A. Calinsa**
**Suero de Quinones, 8**
**E-28002 Madrid(ES)**

(72) Inventor: **Labata, Antonio Porta**
**Zaragoza, 10**
**22002 Huesca(ES)**

(74) Representative: **Kyle, Diana et al**
**ELKINGTON AND FIFE High Holborn House**
**52/54 High Holborn**
**London WC1V 6SH(GB)**

(54) Process for preparing a meat product.

(57) A process is disclosed for preparing a meat product involving a series of operations in which ham is deboned without tearing the tissue or aponeurosis surrounding the muscles, treated with a salting mixture incorporating enzymes, packaged in nets and placed in shaping containers and cooled for 15 to 30 days and finally subjected to a temperature of 20 to 40°C at a relative humidity of 55 to 78% for 40 to 60 days.

EP 0 228 486 A1

# PROCESS FOR PREPARING A MEAT PRODUCT

The present invention refers to a process for preparing a meat product. More specifically, this invention refers to a process for curing and preserving pork hams and Spanish style ham centres.

The main object of this invention is to achieve a substantial improvement in the end product by reducing the nitrite, nitrate and sodium chloride content, as well as imparting a higher degree of succulence to the end product, along with a better utilisation of the meat, a substantial reduction in the risk of appearance of bad odours and flavours, and finally, a more rapid development of the characteristic flavours, whereby the curing time is remarkably shortened, also obtaining a substantially slower aging of the finished product.

The conventional process for preparing ham for its curing and subsequent consumption as a Spanish style ham or ham centre, comprises a series of steps consisting of salting the ham, placing it, once salted, in a cooling chamber, washing it to remove the salt remains, subjecting it to drying in low-temperature chambers until the cured ham is obtained, and finally deboning the ham for its vacuum packaging in plastic casings. This final step is optional since boned ham is also consumed.

Contrary to this conventional process, the process of the present invention is initiated, in the event ham centres were to be obtained, with the deboning of the fresh ham, without tearing the tissue or aponeurosis surrounding the muscles, so that these muscles may conserve their cohesion. Further, the product obtained lacks the hole or hollow presented by conventional ham centres which are deboned after curing.

Clearly, deboning of the fresh ham permits a better utilisation of the offals attached to the bone, mainly the portion comprised of the following muscles: sartorius (long adductor), inner rectum (great adductor), small adductor, short adductor, pectineus, semi-membranous. Such offals can be used as raw materials in the manufacture of other meat products.

Apart from deboning the fresh ham, the skin is also removed and it is then salted.

The steps to be described are applicable both for obtaining ham centres as well as for obtaining Spanish style ham.

Salting is carried out utilising a mixture of sodium chloride, sugar, potassium nitrate, sodium nitrate, ascorbic acid and their salts and enzymes, the mixture being duly balanced so that the cured ham and the ham centres have the least possible content of said products.

In this manner, the conent of such salts in the cured product is highly reduced, since the penetration thereof, in the case of ham centres, results more homogeneous inasmuch as it is deboned and accordingly, the known "shaded zones" produced by the presence of the bone disappear, unless the ham has been excessively salted as normally occurs in the conventional process.

The process of the present invention prevents the problems faced by the consumer due to the existence of very high sodium chloride, nitrate and nitrite contents in the finished product, leading to a clear risk in the increase of neoplasia and cardiovascular pathology, respectively.

In accordance with the process of the invention and referring to the ham centre, once the salting step has terminated, the pieces are packaged in nets and then placed into specially shaped containers so that they may acquire the final shape of the product. Said containers are placed in a cooling chamber for a period of from 15 to 30 days, a period of time sufficient for the salt mixture to impregnate the entire fleshy mass homogeneously. This step, along with those to be described, are also applicable for curing "Spanish style" boned ham.

At the end of this period of time, the pieces are placed in another chamber at a temperature of from 20 to 40°C and a relative humidity of from 55 to 78% for a period of from 40 to 60 days. In this manner, the product is lost rapidly, producing at the same time an infiltration of the fats between the muscular fibres, obtaining a product with a tenderness, smoothness and succulence characteristic of the best matured hams, which characteristics are further maintained for a longer period of time, without producing the shrivelling up characteristic of the aging of the ham.

Simultaneously, the enzymes incorporated into the salt mixture assist those already existing in the meat, upon the more rapid development, by means of a process of glyceride hydrolysis, of the characteristic flavours of the aged ham.

Further, drying by means of heat prevents the differences in curing existing in a conventional slice of ham, the centre of which is normally tender and poorly cured, whereas the outer area thereof is already too dry and hard. Clearly, this homogeneity in the curing of the product involves a total uniformity of the heat therein.

This curing phase based on relatively high temperatures is not realisable in conventional systems since the drying thereof takes place before the entire homogeneisation of the salts in the ham has been produced, wherefore decaying phenomena appear.

From the aforegoing and as indicated, it can be deduced that by means of the process for elaborating ham and ham centres of the invention, the sodium chloride, nitrite and nitrate content in the ham and ham centres is highly reduced, in accordance with the stipulations laid down by the Health Authorities of Spain and other developed countries. Likewise, a more rational utilisation of the raw material is achieved. An aged, high quality product is obtained in a shorter period of time. Finally, the curative homogeneity and presentation of the finished product are improved.

## Claims

1. Process for preparing a meat product, characterised by a first operative step in which the fresh ham is deboned, in the case of a ham centre, without tearing the muscular aponeurosis; a second operative step in which a salting mixture is added to which, apart from sodium chloride, sugar, potassium nitrate, sodium nitrite and ascorbic acid and their salts, enzymes, preferably glyceryl-hydrolases, are incorporated, in a duly balance proportion and in a minimum amount to comply with their curing function; a third operative step in which the pieces of meat are packaged in nets and then placed in shaping containers which, as in the case of boned hams, will be housed in a cooling chamber for a period of time of from 15 to 30 days; and a final operative step in which the pieces are placed in a chamber subjected to a temperature of from 20 to 40°C and a relative humidity of from 55 to 78%, the permanence time in this chamber ranging of from 40 to 60 days.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 314 301 (W.E. BEVERLY) <br> * Claim 4; page 2, column 1, line 73 - page 2, column 2, line 58; figure 3 * <br> --- | 1 | A 23 L 1/318 <br> A 23 B 4/02 |
| A | NL-A-7 210 173 (UNILEVER) <br> * Claims 1,4; examples 1,2 * <br> --- | 1 | |
| A | US-A-3 769 037 (J.J. SHOLL) <br> --- | | |
| A | US-A-3 845 227 (G.W. SHULTS at al.) <br> --- | | |
| A | US-A-4 419 370 (MASANOBU YAMAMOTO) <br> --- | | |
| A | FR-A-2 539 004 (M.F. LEPELTIER et al.) <br> --- | | TECHNICAL FIELDS SEARCHED (Int. Cl.4) <br><br> A 23 L <br> A 23 B |
| A | CA-A-1 136 920 (MASANOBU YAMAMOTO) <br><br> ----- | | |

The present search report has been drawn up for all claims

| Place of search | Date of completion of the search | Examiner |
|---|---|---|
| THE HAGUE | 26-08-1986 | GUYON R.H. |